# EUROPÄISCHE PATENTSCHRIFT

(11) **EP 0 696 251 B1**
(45) Veröffentlichungstag und Bekanntmachung des Hinweises auf die Patenterteilung: **16.07.1997**
(21) Anmeldenummer: 94915093.2
(22) Anmeldetag: 22.04.1994
(51) Int. Cl.: B60N 2/44, A47C 7/46

(54) **VORRICHTUNG FÜR DIE HÖHENVERSTELLUNG UND/ODER WÖLBUNGSVERSTELLUNG EINES BIEGEELASTISCHEN STÜTZELEMENTES EINER RÜCKENLEHNE EINES SITZES**
DEVICE FOR ADJUSTING THE HEIGHT AND OR CURVATURE OF AN ELASTICALLY FLEXIBLE SUPPORTING COMPONENT OF A SEAT BACK
DISPOSITIF PERMETTANT DE REGLER LA HAUTEUR ET/OU LA COURBURE D'UN ELEMENT DE SOUTIEN ELASTIQUE SOUPLE DU DOSSIER D'UN SIEGE

(30) Priorität: 30.04.1993 DE 4314325
(43) Veröffentlichungstag der Anmeldung: 14.02.1996
(73) Patentinhaber: AMEU MANAGEMENT CORP., Panama 5 (PA)
(72) Erfinder: KLINGLER, Knud, D-90491 Nürnberg (DE)
(74) Vertreter: Patentanwälte Zellentin & Partner
(86) Internationale Anmeldenummer: EP9401256
(87) Internationale Veröffentlichungsnummer: WO9425307

(56) Entgegenhaltungen:
- EP-A- 0 552 904
- EP-A- 0 563 709
- WO-A-91/01666
- DE-A- 2 935 352
- DE-A- 3 942 486
- FR-A- 2 596 334
- GB-A- 2 013 487
- US-A- 5 217 278

## Beschreibung

Die Erfindung betrifft eine Vorrichtung für die Höhenverstellung und/oder Wölbungsverstellung eines biegeelastischen Stützelementes für die Lordosenwirbel eines Sitzenden, das im Rahmen einer Rückenlehne eines Sitzes angeordnet ist, wobei jede Vorrichtung für die Höhenverstellung bzw. Wölbungsverstellung jeweils ein Getriebe mit einer Schnecke, einem Schneckenrad, einem Ritzel und einem Zahnelement, sowie einen Antrieb aufweist.

Eine derartige Vorrichtung ist aus der AT-B-394 829 bekannt. Bei dieser Vorrichtung sind am Rahmen zwei Elektromotore, einer für die Verstellung der Höhe, und der andere für die Verstellung der Wölbung des Stützelements angeordnet. Auf der Rückseite des Stützelements ist für jeden Motor ein Getriebe mit einer Schnecke, einem Schneckenrad, einem Ritzel und einer Zahnstange angeordnet, die jeweils über eine biegsame um 180 Grad gebogene Antriebswelle mit dem Elektromotor verbunden sind. Zur Höhenverstellung ist die Zahnstange des entsprechenden Getriebes mit einem Waagebalken gelenkig verbunden, der wiederum mittels starrer Speichen mit dem oberen bzw. unteren Ende des Stützelementes verbunden ist. Durch das Getriebe wird ein großes Übersetzungsverhältnis erreicht, das es erlaubt, auch Elektromotore mit geringer Leistung zur Verstellung einzusetzen, wobei allerdings durch die biegsame Welle Energie verloren geht, ein hoher unangenehmer Geräuschpegel verursacht wird und sie einem schnellen Verschleiß unterliegt. Gleichzeitig ist der Aufbau äußerst kompliziert und daher kostenaufwendig.

Aufgabe der Erfindung ist es, eine Vorrichtung der eingangs genannten Art dahingehend zu verbessern, daß bei einfachem konstruktiven Aufbau eine Verstellung in definierten Grenzen energiesparend und ohne Lärmentwicklung möglich ist.

Diese Aufgabe wird durch eine Vorrichtung mit den Merkmalen des Anspruches 1 gelöst.

Vorteilhafte Ausgestaltungen der Erfindung sind den Unteransprüchen zu entnehmen.

Nachstehend wird die Erfindung anhand eines Ausführungsbeispieles unter Bezug auf Zeichungen näher erläutert. Es zeigt:
- Fig. 1: den Rahmen einer Rückenlehne mit einer Vorrichtung zur Verstellung der Höhe des Stützelementes und einer Vorrichtung zur Verstellung der Wölbung des Sitzelementes;
- Fig. 2: eine Verstellvorrichtung im teilweisen Längsschnitt;
- Fig. 3: einen Schnitt durch die Schnecke, das Zahnrad und das Ritzel des Getriebes einer Verstellvorrichtung;
- Fig. 4: einen Schnitt nach Linie IV-IV in Fig. 2.

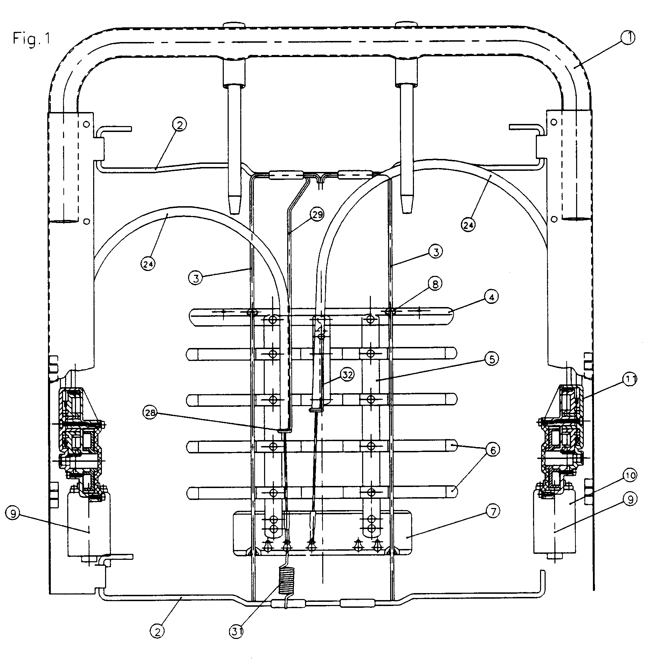

Die in Fig. 1 schematisch dargestellte Rückenlehne weist einen Rahmen 1 auf, in dem zwischen zwei Querstreben 2 eine aus zwei parallel zueinander angeordneten Stäben 3 bestehende Führung für ein darauf auf- und abbeweglich angeordnetes Stützelement 4 befestigt ist.

Das Stützelement 4 kann, wie in Fig. 1 dargestellt, aus zwei elastisch biegbaren Langsstreifen 5 in paralleler Anordnung bestehen, die durch beabstandete Querstreifen 6 miteinander verbunden sind. Am oberen bzw. unteren Ende des Stützelementes 4 können verstärkte Streifen oder eine Verstärkungsplatte 7 vorgesehen sein, die vorzugsweise mit auf den Stäben 3 gleitenden Gleitelementen 8 verbunden sind. Das Stützelement 4 kann aus beliebigem Material, auch aus Kunststoff oder Blech und Kombinationen daraus, aus mehreren Teilen zusammengesetzt, oder aus einem Stück bestehen und z. B. ausgestanzt sein. Das Stützelement 4 kann auch zusätzliche nicht dargestellte Stützelemente aufweisen, die zur Abstützung der unteren Rückenpartie dienen und als getrennte Teile am Stützelement 4 befestigt oder einstückig mit ihm gestaltet sein können.

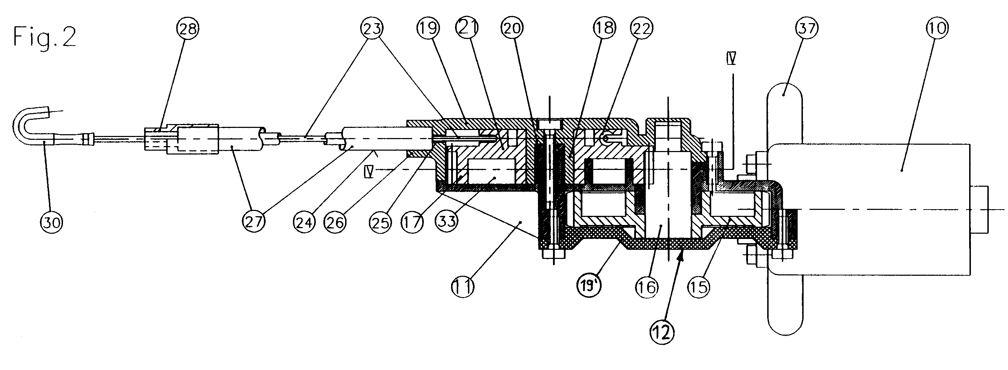

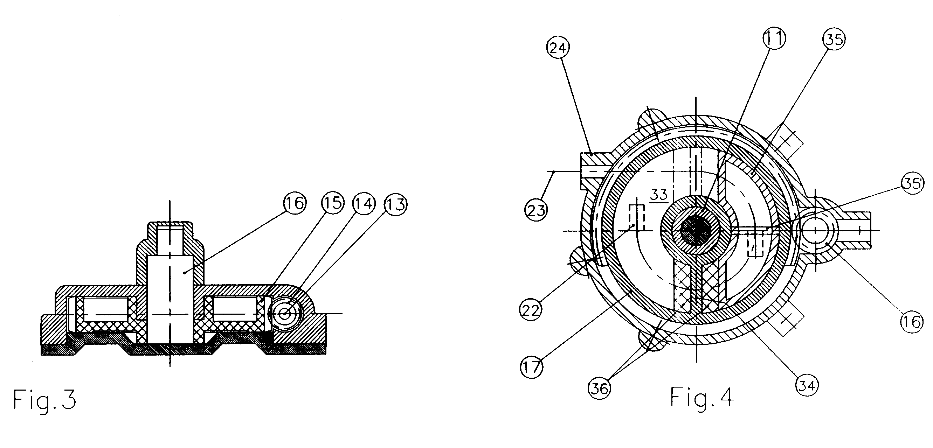

An den Seitenholmen des Rahmens 1 ist jeweils ein Elektromotor 9 angeordnet, dessen Gehäuse 10 fest mit dem Gehäuse 11 eines Übersetzungsgetriebes 12 verbunden ist. Der Elektromotor 9 weist eine Abtriebswelle 13 (Fig. 3) auf, auf der eine Schnecke 14 befestigt ist, die in das Getriebegehäuse 11 ragt und mit dem darin angeordneten Schneckenrad 15 kämmt. In der Zentralachse des Schneckenrads 15 ist ein Ritzel 16 drehfest mit dem Schneckenrad 15 angeordnet. Der über das Schneckenrad 15 und über das abdeckende Teil des Gehäuses 11 hinausragende Teil des Ritzels 16 kämmt mit einem Zahnrad 17, das im Ausführungsbeispiel gemäß Fig. 2 auf einer Achse 18 drehbar gelagert ist. Im Ausführungsbeispiel ist die Drehachse 18 einstückig mit einem das Gehäuse 11 abschließenden Deckel 19 ausgeführt. Die Achse 18 kann selbstverständlich auch Bestandteil des Gehäuses 11 sein oder als separater Teil am Deckel 19 oder Gehäuse 11 befestigt sein. Um den Zusammenbau zu erleichtern, weist das Gehäuse 11 einen zylindrischen Vorsprung 20 auf, der ein zentriertes Aufsetzen des Deckels 19 erleichtert, der ein entsprechendes Langloch zur Aufnahme des zylindrischen Vorsprungs 20 aufweist. Das Zahnrad 17 trägt an der dem Deckel 19 zugewandten Seite eine Spule 21, die im Ausführungsbeispiel einstückig mit dem Zahnrad 17 ausgeführt ist. Der Teil des Gehäuses 11 in dem das Schneckenrad 15 mit dem Ritzel 16 angeordnet ist, ist durch einen Deckel 19' abgedeckt, um den Zugang zu ihnen zu erleichtern. Die Deckel 19, 19' sind im Ausführungsbeispiel mittels Schrauben am Gehäuse 11 befestigt, sie können aber auch anders, z. B. als Schnappdeckel gestaltet sein.

Die Spule 21 kann lösbar mit dem Zahnrad 17 verbunden sein, da es dadurch möglich ist, Spulen 21 mit unterschiedlichem Durchmesser zu verwenden, was, wie später noch näher erläutert wird, unterschiedliche Verstellwege zu erzielen ermöglicht. Spulen 21 mit verschiedenen Durchmessern können aber auch in einstückiger Ausführung als ganzes mit dem Zahnrad 17 ausgewechselt werden. Die Spule 21 weist eine Spurrille am Umfang und wenigstens eine Aufnahmeöffnung 22 zur Aufnahme des verdickten Endes eines Seilzugs 23 einer Bowdenzuganordnung 24 auf. Im Deckel 19 ist eine Durchgangsbohrung 25 ausgeführt, die in einer Aufnahmehülse 26 in einem Vorsprung des Deckels 19 mündet. Die Aufnahmehülse 26 dient zur Aufnahme des einen Endes der Außenhülse 27 der Bowdenzuganordnung 24.

Das andere Ende der Außenhülse 27 ist in einer weiteren Aufnahmehülse 28 gelagert, die bei der Vorrichtung zur Höhenverstellung des Stützelementes 4 an einer mit den Querstrebe 2 verbundenen und parallel zu den Stäben 3 befestigten Halterung 29 (Fig. 1) angeordnet ist. Das freie Ende des durch die Aufnahmehülse 28 geführten Seilzugs 23 mündet gemäß Ausführungsbeispiel in einem Haken 30 (Fig. 2), der in die untere Verstärkungsplatte 7 des Stützelements 4 eingehängt ist. Zwischen der Verstärkungsplatte 7 und der unteren Querstrebe 2 des Rahmens 1 ist eine Rückholfeder 31 eingehängt, wobei es auch mehrere Federn sein können, die das Stützelement 4 zur unteren Querstrebe 2 zieht (ziehen). Es sind auch Lösungen möglich, bei denen das Stützelement durch die Bowdenzuganordnung nach unten gezogen und durch die Federn nach oben gedrückt werden (nicht dargestellt).

Bei der Vorrichtung zur Verstellung der Wölbung des Stützelementes 4 ist die zweite Aufnahmehülse 28 für die Außenhülse 27 der Bowdenzuganordnung 24 im oberen Bereich des Stützelementes 4, gegebenenfalls an einer Verlängerung 32, befestigt. Der Seilzug 23 ist mit seinem Haken 30 an der unteren Kante der Verstärkungsplatte 7 eingehängt.

Das Zahnrad 17 weist eine von seiner Unterseite ausgehende kreisförmige Nut 33 auf. In die Nut 33 ragt ein Vorsprung, der im Ausführungsbeispiel als Steg 34 (Fig. 4) gestaltet ist. Der Steg 34 ist beidseitig mit einem Puffer 36 aus beliebigem dazu geeigneten Material z. B. Gummi versehen. Im Bereich der Nut 33 ist im Gehäuse 11 ein Anschlag 35 angeordnet, dessen Anschlagflächen dicht beieinander oder in einem gewissen Abstand voneinander liegen können, siehe die Anschläge 35, 35' in Fig. 4. Durch den Anschlag kann der Aufwickelweg für den Seilzug 23 auf die Spule 21 beliebig bis auf fast 360° eingestellt werden. In Fig. 4 ist, obwohl in einer anderen Ebene liegend, eine Lage des Seilzugs 23 strichliert dargestellt.

Durch die Anordnung und Gestaltung des Anschlags 35, 35' bzw. ihrer Anschlagsflächen sowie die Größe des Durchmessers der Spule 21 kann der Aufwickelweg und damit der Hubweg der jeweils gewünschten Länge bzw. Größe der Höhenverstellung bzw. Wölbungsverstellung angepaßt werden. Eine zusätzliche Möglichkeit zur Verstellung besteht dann, wenn eine oder beide Aufnahmehülsen 26, 28 verstellbar, zum Beispiel ausschraubbar, angeordnet sind.

Anstelle einer oder mehrerer Rückholfedern 31 bei der Vorrichtung zur Höhenverstellung kann auch eine zweite identische Höhenverstellvorrichtung vorgesehen sein, was zwar etwas aufwendiger ist, jedoch den Vorteil hat, die Rückholkräfte der Feder(n) 31 nicht ausgleichen zu müssen.

An die Stelle eines Elektromotors 9 kann auf der Abtriebswelle 13 auch ein Handgriff zum Beispiel ein Handrad 37 (in Fig. 2 angedeutet) oder ein Hebel angeordnet sein, der gegebenenfalls mit einer Rasteinrichtung, die gegebenenfalls mit einer ausklinkbaren Sperre versehen sein kann, verbunden ist.

Ein beispielweises Übersetzungsverhältnis für das beschriebene Übersetzungsgetriebe 12 besteht zwischen Schnecke 14 und Schneckenrad 15 mit 1:90 in der ersten Stufe (Ebene) und zwischen dem Ritzel 16 und dem Zahnrad 17 mit 1:6 in der zweiten Stufe (Ebene), was ein Gesamtverhältnis von 1:540 ergibt, das klar macht, daß nur ein geringer Energieaufwand zur Verstellung, sowohl der Höhe, als auch der Wölbung eines Stützelementes notwendig ist, wo jeweils der maximale Weg der Verstellung durch die Anschläge 35, 35' definiert vorgegeben wird, was einer Zerstörung des Stützelements 4 und weiterer Teile der Vorrichtung durch Aufwendung zu hoher Verstellkräfte z. B. bei einer manuellen Verstellung vorbeugt.

## Patentansprüche

1. Vorrichtung für die Höhenverstellung und/oder Wölbungsverstellung eines biegeelastischen Stützelementes (4) für die Lordosenwirbel eines Sitzenden, das im Rahmen (1) einer Rückenlehne eines Sitzes angeordnet ist, wobei jede Vorrichtung für die Höhenverstellung bzw. Wölbungsverstellung jeweils ein Getriebe (12) mit einer Schnecke (14), einem Schneckenrad (15), einem Ritzel (16) und einem Zahnelement sowie einen Antrieb aufweist,
dadurch gekennzeichnet, daß
das Getriebe (12) unmittelbar mit dem Antrieb derart verbunden ist, daß dessen starre Abtriebswelle (13) die in das Schneckenrad (15) eingreifende Schnecke (14) trägt, wobei axial im Schneckenrad (15) das Ritzel (16) befestigt ist, das in einer zum Schneckenrad (15) parallelen Ebene mit einem Zahnrad (17) kämmt, wobei auf dem Zahnrad (17) wenigstens eine Spule (21) angeordnet ist, an der das eine Ende des Seilzuges (23) einer Bowdenzuganordnung (24) befestigt und auf sie aufwickelbar ist, wobei das Zahnrad (17) einen Steg (34) aufweist, der mit Anschlägen (35) im Gehäuse (11) des Getriebes (12) die Bewegung des Zahnrades (17) definiert begrenzend zusammenwirkt.

2. Vorrichtung nach Anspruch 1,
dadurch gekennzeichnet, daß
der Antrieb ein manuell bedienbarer Handgriff ist.

3. Vorrichtung nach Anspruch 1,
dadurch gekennzeichnet, daß
der Antrieb ein Elektromotor (9) ist.

4. Vorrichtung nach einem der Ansprüche 1 bis 3,
dadurch gekennzeichnet, daß
die Spule (21) auswechselbar am Zahnrad (17) befestigt ist.

5. Vorrichtung nach einem der Ansprüche 1 bis 4,
dadurch gekennzeichnet, daß
zur Höhenverstellung am oberen und unteren Ende des Stützelements (4) je eine Verstellvorrichtung angreift.

6. Vorrichtung nach einem der Ansprüche 1 bis 4,
dadurch gekennzeichnet, daß
zur Höhenverstellung am oberen oder unteren Ende des Stützelements eine Verstellvorrichtung und am jeweils anderen Ende des Stützelements eine oder mehrere mit dem Rahmen (1) verbundene Rückholfeder(n) (31) vorgesehen ist (sind).

7. Vorrichtung nach einem der Ansprüche 1 bis 6,
dadurch gekennzeichnet, daß
der Vorsprung und/oder die Anschlagsflächen mit einem Puffer (36) versehen sind.

## Claims

1. Device for adjusting the height and/or curvature of an elastically flexible supporting component (4) for the lumbar vertebrae of a seated person which is fitted in the frame (1) of a back rest of a seat, in which each device for adjusting the height or curvature comprises a gear (12) with a worm (14), a worm wheel (15), a pinion (16), a toothed component and a drive, characterised in that the gear (12) is connected directly to the drive in such a way that its rigid output shaft (13) carries the worm (14) engaging with the worm wheel (15), whereby the pinion (16) is secured axially in the worm wheel (15) and meshes in a plane parallel to the worm wheel (15) with a cog (17), whereby at least one reel (21) is arranged on the cog (17) to which one end of the traction wire (23) of a Bowden gear (24) is secured and can be wound thereon, whereby the cog (17) comprises a web (34) which acts definitely limiting the movement of the cog (17) with mating surfaces (35) in the housing (11) of the gear (12).

2. Device according to claim 1, characterised in that the drive is a manually operable handle.

3. Device according to claim 1, characterised in that drive is an electric motor (9).

4. Device according to one of claims 1 to 3, characterised in that the reel (21) is secured replaceably on the cog (17).

5. Device according to one of claims 1 to 4, characterised in that for adjusting the height an adjusting device acts respectively on the top and bottom end of the supporting component (4).

6. Device according to one of claims 1 to 4, characterised in that for adjusting the height an adjusting device is provided on the top or bottom end of the supporting component and on the respective other end of the supporting component one or more return spring(s) (31) connected to the frame (1) is (are) provided.

7. Device according to one of claims 1 to 6, characterised in that the projection and/or the mating surfaces are provided with a buffer (36).

## Revendications

1. Dispositif permettant de régler la hauteur et/ou la courbure d'un élément de soutien élastique souple (4) prévu pour la vertèbre lordosique d'une personne assise, élément disposé dans le cadre (1) d'un dossier de siège, chaque dispositif de réglage de la hauteur resp. de la courbure étant respectivement doté d'un engrenage (12) avec une vis sans fin (14), une roue à denture hélicoïdale (15), un pignon (16), un élément denté et un entraînement,
caractérisé en ce que
l'engrenage (12) est directement relié à l'entraînement de telle sorte que son arbre de sortie fixe (13) porte la vis sans fin (14) qui s'engrène dans la roue à denture hélicoïdale (15), le pignon (16) qui s'engrène avec une roue dentée (17) dans un plan parallèle à la roue à denture hélicoïdale (15) étant fixé en sens axial dans la roue à denture hélicoïdale (15), au moins une bobine (21) à laquelle est fixée une extrémité du câble de transmission (23) d'une commande Bowden (24) et sur laquelle cette extrémité peut être embobinée étant disposée sur la roue dentée (17), la roue dentée (17) présentant une nervure (34) qui coopère avec des butées (35) situées dans le carter (11) de l'engrenage (12) pour imiter de façon définie le mouvement de la roue dentée (17).

2. Dispositif selon la revendication 1,
caractérisé en ce que
l'entraînement est une poignée pouvant être actionnée par voie manuelle.

3. Dispositif selon la revendication 1,
caractérisé en ce que
l'entraînement est un moteur électrique (9).

4. Dispositif selon l'une des revendications 1 à 3,
caractérisé en ce que
la bobine (21) est fixée à la roue dentée (17) de manière à pouvoir être remplacée.

5. Dispositif selon l'une des revendications 1 à 4,
caractérisé en ce que
respectivement un dispositif de réglage assure le réglage en hauteur de l'extrémité supérieure et inférieure de l'élément de soutien (4).

6. Dispositif selon l'une des revendications 1 à 4,
caractérisé en ce que
un dispositif de réglage est prévu pour le réglage en hauteur de l'extrémité supérieure et inférieure de l'élément de soutien et en ce qu'un ou plusieurs ressort(s) de rappel (31) relié(s) au cadre (1) est (sont) prévu(s) à l'autre extrémité respective de l'élément de soutien.

7. Dispositif selon l'une des revendications 1 à 6,
caractérisé en ce que
la partie saillante et/ou les surfaces de butée sont munies d'un tampon (36).
